# EUROPEAN PATENT APPLICATION

(11) **EP 1 857 536 A1**
(43) Date of publication of application: **21.11.2007**
(21) Application number: 06125494.2
(22) Date of filing: 06.12.2006
(51) Int. Cl.: C12G 1/00

(54) **Apparatus for malo-lactic fermentation and process thereof**

(30) Priority: 15.05.2006 IT TO20060350
(71) Applicant: Bonelli, Fabrizio, I-15033 Cassale Monferrato (Alessandria) (IT); Farinelli, Giampietro, I-10034 Chivasso (Torino) (IT)
(72) Inventor: Bonelli, Fabrizio, I-15033 Cassale Monferrato (Alessandria) (IT); Farinelli, Giampietro, I-10034 Chivasso (Torino) (IT)
(74) Representative: Freyria Fava, Cristina

(57) **Abstract**

Apparatus - and the corresponding process - for inducing malolactic fermentation in a fermented fruit juice containing a first amount of malic acid, comprising:
a. a reaction vessel (2);
b. an anchorage porous support (3) having an external surface, located within the reaction vessel (2), and suitable to fix on its external surface microorganisms susceptible to induce the malolactic fermentation;
c. a first inlet means (4) for receiving the fermented fruit juice containing a first amount of malic acid; and
d. a second outlet means (5) for discharging the fermented fruit juice containing a second amount of malic acid lower than the first amount of malic acid,

wherein said first inlet means (4) and said second outlet means (5) communicate directly with the reaction vessel (2) without the interposition of filtering means.

## Description

The present invention concerns an apparatus for inducing malo-lactic fermentation in a fermented fruit juice, preferably wine, and the corresponding process.

### BACKGROUND OF THE INVENTION

In the vinification process, the malo-lactic fermentation (MLF) contributes to reduce the wine acidity and to increase the organoleptic properties. Most of wine-producers do not bottle wine until MLF is not complete: in fact, if MLF takes place in the bottle, the wine is irremediably degraded. The good wine-making practice provides, thus, for waiting the completion of the MLF before bottling the wine.

Some wine-producers wait for the MLF taking place naturally due to the Oenococcus oeni cells growth in the wine. Nevertheless, the cells growing time cannot be known *a priori:* the MLF can take place from 2 to 4 weeks after the completion of the alcoholic fermentation or after some months or cannot take place at all.

The delay or the missed completion of the MLF create many problems to the wine-producers. For example, if the MLF delays wine-producers generally heat the cellar, which determines a great impact on the production costs. Another risk linked to the missed or partial MLF spontaneously induced is the potential formation of ethylcarbamate (EC). EC, which is considered a carcinogenic compound, is made by the reaction of urea and ethanol. Some strain of lactic bacteria are able to produce citrulline, which is the precursor of EC, starting from arginine and thus to secrete this precursor in the wine.

The EC production is favoured by the temperature increase; thus, the normal conditions employed to induce the MLF, i.e. increasing the temperature of the cellar and/or the temperature of the storage vessel due to the endogenous bacteria, favour the potential production of EC.

Thus, the spontaneous MLF induced by not well defined bacteria strains should be avoided.

For this reason, the wine-producers, similarly to what happens with the alcoholic fermentation yeasts, started to test new process for inducing the MLF through the addition of malo-lactic bacteria, possibly characterized by a reduced or totally missing production of citrulline.

However, the addition of malo-lactic bacteria has two main disadvantages:
1) the purchase of large amount of malo-lactic bacteria might be very expensive;
2) the duration of MLF process might be long lasting because of the unfavourable wine environment, or
3) malolactic bacteria might not be capable to induce malic acid degradation with wines that present adverse conditions for the bacterial cells.

This issue has stimulated the research of alternative methods to induce the MLF. For example, European Patent 0 327 380 describes a method which is based on the observation that MLF induction requires a very high concentration of bacterial cells in a stationary phase (>10⁸ CFU/ml): under these conditions the bacteria act as biocatalysts. The method disclosed in EP-B-0 327 380 provides for the biocatalyst bacteria entrapped in a reactor; the wine flows inside the reactor through an inlet filter, and at the end of the MLF the wine flows through an exit port where a second filter with 0.45 µm is present. This scheme of "double filtration" has been proposed to overcome the limitation of a previous teaching disclosed in US-A-4 380 552 which was characterized by a phenomenon of an unacceptable microbial growth in wine.

The method described in European Patent 0 327 380 is of limited practical value, because a wine which flows through a filter of a sub-micron porosity loses its organoleptic properties. In fact, filtering (and especially micro-filtering) removes elements that contribute to flavours and aromas. Therefore, fine wine producers, to avoid "collateral damage" that leaves their wine clean but lifeless, normally opt for soft systems of cleaning such as natural clarification (racking), when possible, or minimal filtration through the use of large pores filters (i.e. > 10 µm). EP-B-0 237 380 discloses also the use of bacterial cells attached to solid supports like thin sheets or suitable material such as beads made of glass, gel or alginate. However, the use of bacteria entrapped e.g. in alginate particles might be cumbersome in respect to the efficiency of the particles preparation (i.e. amount of the catalytic molecules to be added) and the maintenance of the sterility. Furthermore, the dispersion properties of the particles and their wettability can affect the malo-lactic capacity of the system, which may vary as a function of the matrix of the wine to be treated; finally, this method is not amenable for scale up, because limited by the volume of entrapped cells.

### DESCRIPTION OF THE INVENTION

Object of the present invention is to provide an apparatus - and the corresponding process - able to induce the MLF in a fermented fruit juice, preferably wine, which overcomes the limitations of the prior art.

According to the present invention, the object is reached thanks to the solution disclosed in a detailed way in the claims which follow. The claims are integral part of the technical teaching herein provided.

By disclosing the invention, we refer to the wine only as an example.

The present invention provides the use of an apparatus to induce the MLF where the biocatalytic cells (preferably bacteria) are coated on a support made of a porous structure - also called cellular filter - which allows maximizing the surface contact between the biocatalytic cells and the wine to be converted.

More specifically, the present invention provides for the formation of the cellular filter *in situ* within the same apparatus where the MLF occurs. It must be specified that in the present invention wine does not undergo to any filtration event, which would cause a lowering of the amount of the various wine substances, therefore, impairing its organoleptic features.

### DETAILED DESCRIPTION OF THE INVENTION

The present invention will now be described in detail with reference to the attached drawings, which are provided purely by way of non-limiting examples and in which:
- figure 1 shows a scheme of a preferred embodiment of the present invention;

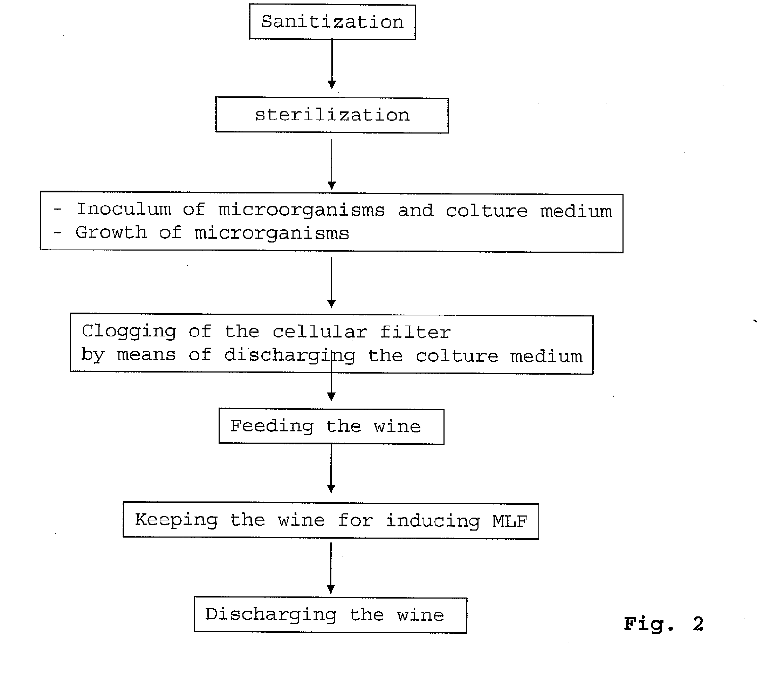

- figure 2 is a flow diagram which represents the main phases of the process realized with the apparatus according to the present invention.

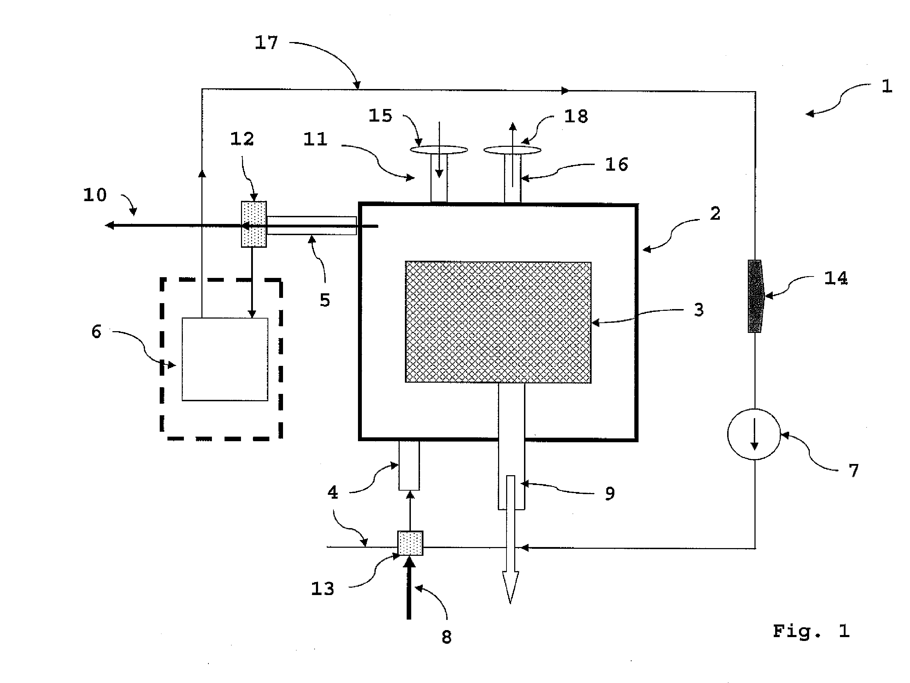

With reference to figure 1, the apparatus, which is indicated with reference number 1, includes a reaction vessel 2 into which a porous support (a filter) to anchor the bacterial cells is present, first inlet means 4 for introducing wine or the bacterial inoculums and/or the culture media into the reaction vessel and second outlet means 5 for withdrawing from the reaction vessel 2 the culture broth or the wine during the recirculation phase which is carried out through a recirculation plant 17, as well as for withdrawing wine from the apparatus 1 at the end of the MLF. Wine exits from the apparatus 1 through withdrawing/evacuation means 10 which are in fluid communication with the second outlet means 5, controlled by a valve 12. The wine recirculation into the apparatus 1 is activated by a pump 7.

Through the first inlet means 4, which is in fluid communication with a third inlet means 8 by means of a valve 13, it is possible to introduce the wine into the reaction vessel 2, the culture media, the inoculums of the malolactic bacteria, as well as the cleaning, sterilization and washing solutions of the apparatus 1

The porous anchorage support 3 is in fluid communication with a fourth outlet means 9, through which the exhausted culture media for the bacteria responsible for the MLF is withdrawn.

The apparatus 1 is also provided with i) a fifth inlet means 11 for inserting gas within the vessel 2, wherein the inlet means 11 is provided with a first filter 15, and ii) a sixth outlet means 16 for exiting the gas from the vessel 2, wherein the inlet means 16 is provided with a second filter 18.

The apparatus 1 is also equipped with a heat exchanger 14.

The apparatus 1 is provided with a control unit 6, which has the function to control the valves 12 and 13 (preferably electronic valves) and adequate means - located within the reaction vessel 2 - for checking the parameters into the vessel 2 and/or in the recirculation plant 17. Said means for controlling the parameters within the reaction vessel 2 are e.g. sensors of pH, temperature, partial pressure of O_{2,} CO₂, N₂ and air, wherein said controlling means are able to monitor the bacterial growth and the occurrence of the MLF. Said controlling means are able to control the valve 12 for completely withdrawing the wine from the apparatus 1 once the MLF has been completed.

The anchorage support 3 is used to immobilize the microbial cells which are in the late phase of growth (yeasts and bacteria) at a concentration able to control the conversion of malic acid into lactic acid, and preferably at a concentration of 10⁹-10¹⁰ CFU/ml or more. Microorganisms which are conveniently used to induce the MLF are bacteria belonging to Oenococcus oeni species. However, any kind of microorganism capable to induce the MLF can be conveniently used with the present invention.

Anchorage supports that can be used into the apparatus 1 include surface or depth filters, lenticolar filters, filtering cartridges, sponges, ceramics, stainless filters or any kind of surface capable to anchor microorganisms.

Due to the characteristics of the porous support 3 and to the apparatus design, the present invention exceeds the limitations of the prior art because of:
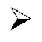 the support 3, as well the whole apparatus, can be sterilized *in situ* in an automatic fashion rendering the sterilization process efficient and user friendly, thus to be accomplishable in a cellar environment; and
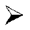 the support 3 is able to resist to high pressure and flow rates, in view of that, the apparatus has been designed in a way that the support 3 is directly connected to the fourth outlet means 9 that allows to turn all the flow against the support, rendering the anchorage of the bacterial cells highly efficient.

An additional feature of the support 3, which is able to render the cellular anchorage highly efficient, is its positive zeta potential in aqueous fluids; in this manner, it is possible to add to the "physically driven mechanism" a "chemically driven mechanism" of anchorage, due the overall negative charge of the employed bacteria.

The support 3 is also inert towards colloidal interference, i.e. it avoids the adhesion of colloidal substances which can impair the activity of the cells on the wine, and is highly wettable, in order to facilitate the contact between the wine and the cells; opposed to the known art, there is no possible effects of the different wine matrixes on the particles solubility and dispersion.

The adoption of the support 3 is amenable for scale up because the malo-lactic capacity is in direct relationship with the surface area of the filter that can be easily adapted as a function of the wine volume to be converted.

The design of the apparatus allows to use all the advantages of the filters without actually filtering the wine; the present invention, once the bacteria immobilization has been completed inside the vessel 2, allows the wine to freely flow inside it, brushing against the support 3. In other terms, the support 3 here acts as an immobilizing agent, thus creating an "enzymatic reactor" wherein the wine is not passing through it but is brushing against it.

In a preferred embodiment of the invention the apparatus 1 is designed to work in a continuous way; however it is conceivable to work also in a discontinuous manner.

The process for inducing the MLF in the wine, realized according to the present invention, includes the following steps:
a) feeding the wine into the vessel 2 in which the anchorage support 3 has been immobilized with the microbial cells capable to induce the conversion of malic acid in lactic acid, wherein the microbial cells are at a plateau concentration;
b) keeping and/or recirculating the wine within the vessel 2 for a period of time sufficient for the conversion of at least a portion of malic acid to lactic acid;
c) withdrawing of the wine from the apparatus 1.

Prior to the wine feeding into the vessel 2, the apparatus 1 undergoes to a sterilization procedure, followed by a step of microbial growth to a stationary phase; at that point, the cells are immobilized onto the anchorage support 3. The apparatus 1 works, according to the present invention, as a bio-reactor. Given a certain amount of microbial cells, these can be grown into the apparatus; the microbial growth can be induced and monitored through specific regulation and control systems (i.e. pH, pO_{2,} pCO_{2,} pN_{2,} air and temperature sensors) managed by the control unit 6.

At this stage, the apparatus is ready to induce the MLF. At the end of the MLF, the apparatus undergoes to a final washing step.

All the steps can be carried out with continuous controls of the growth parameters (i.e. pH, pCO₂), of MLF induction (pH) and washing control (pH).

Furthermore, the apparatus 1 is also configured to be sterilized and sanitized *in situ;* the sanitization and the further washing can be monitored in continuous through the pH measurement of the sanitization and washing solutions.

The present invention exploits the biocatalytic properties of high concentrations of Oenococcus oeni or other suitable microorganisms which are anchored on the support 3 into the vessel 2.

The expert in the art will be able to determine also thanks to the present sensors, the suitable combination of cellular density and wine flow which thus allowing the MLF in a short period of time without any detrimental effect to the wine quality.

The apparatus may also be used to check the converting features of specific microorganisms by measuring the kinetic of the malic acid degradation, i.e. the time necessary for a complete conversion, the quantities of malic acid, lactic acid, citric acid and acetic acid present in the wine before and after the fermentation. To this end, the size of the vessel 2 will be reduced compared to the size of the vessel 2 for large volume treatment.

Furthermore, evaluating the necessary concentrations of microorganisms anchored in the apparatus 1, it is possible - at the end of the fermentation phase, to use the processed wine, i.e. substantially free of malic acid and containing at least a portion of the microorganisms able to induce the FML detached from the anchor support 3, as an inoculum to induce the FML in larger wine volumes. This operation can be carried out immediately after or also during the alcoholic fermentation.

### Procedure of sterilization, sanitization and washing of the apparatus

At the beginning of the process, the apparatus is sterilized according the known techniques; in a possible configuration the apparatus may be linked to vapour source for a period of 30 min. at a temperature of 125°C; the sanitization is carried out washing the entire apparatus with 0.5 N NaOH and subsequent washing with water; the process ca be monitored in continuous through the pH control.

### Procedure for inoculums, bacterial growth and immobilization of the microorganisms on the support

Once the sterilization and sanitization procedures have been completed the apparatus is ready for the inoculums and the growth steps. The inoculums, withdrawn from a reservoir containing the adequate amount of culture media, are introduced into the vessel 2 through the inlets means 8 and 4. Then the bacterial growth is induced by mean of the continuous flow of the preparation throughout the elements of the apparatus; bacterial growth is monitored through the control of various parameters including pH, pO₂ and CO₂. Once the bacterial culture has reached the stationary phase, the exhausted culture media is withdrawn through the outlet 9. In this way, the cells are immobilized onto the support 3, because of a superior size than the pores of the filter. The result is that the support is covered by a cellular multilayer and then ready for the MLF.

This step is activated by loading the wine into the vessel 2, allowing it to be in contact with the cellular multilayer anchored on the support 3; occurrence of the MLF is monitored by pH, and the whole process is managed by the control unit 6.

Once the process has been completed, the apparatus is sanitized, washed and sterilized for another working cycle.

### Example 1

The aim of this example is to show the potential of the present invention compared to one of the current technology, i.e. the addition of malolactic bacteria directly in the wine to be converted.

A Nebiolo wine (to become Barolo) produced in 2005 which did not fully develop the MLF was taken to validate the invention process. Parameters, which affect the bacterial viability, were measured showing the following values:

| | |
|---|---|
| 1. Alcohol (% v/v) | 14 |
| 2. Titratable acidity (g/L) | 6.30 |
| 3. pH | 3.60 |
| 4. Malic acid (g/L) | 1.25 |

MLF was not progressing after several months upon the completion of the alcoholic fermentation and no signals of progression were anticipated.

10 L of this wine were divided in 2 aliquots of 5 L/each; one aliquot was treated according to the present invention and the other was treated in parallel with the conventional technology, following the instructions of use. Briefly 4 gr. of Elios 1 cells (Lallemand SAS, St. Simon, FRANCE) were dissolved in 200 ml of water and further diluted in 2.4 L of MRS culture media, made of (g/litre): peptone from casein 10.0; meat extract 8.0; yeast extract 4.0; D(+)-glucose 20.0; dipotassium hydrogen phosphate 2.0; Tween^{®} 80 1.0; di-ammonium hydrogen citrate 2.0; sodium acetate 5.0; magnesium sulfate 0.2; manganese sulfate 0.04. The bacterial preparation was then inoculated in the vessel 2 according the procedure described here above; the vessel 3 was prepared with a porous support. The cells were grown over night at high concentration (>10⁹-10¹⁰ CFU/ml); then the exhausted media was withdrawn through the outlet means 9, resulting on formation of a bacterial multilayer onto the support 3.

2 litres of wine were then loaded into the apparatus and recirculated for 18 hours. One litre was withdrawn and additional 1 litre was added and kept in the vessel 2 for 8 hours; this procedure was repeated 3 times for 36 hours at regular intervals. Then after 120 hours from the start, pH and malic acid were measured, finding the following results:
pH: 3.73
malic acid: 0.15 g/L

At the same time the other 5 L of wine were treated with the conventional technology and pH and malic acid were measured:
pH: 3.59
malic acid: 1.20 g/L

The conclusion was that no malic acid degradation was found with the common knowledge, whilst with the new technology complete malic acid degradation was observed.

### Example 2

In order to verify how much "malic acid-degrading capacity" is retained by the converted wine, presumably due the presence of malo-lactic bacteria detached from the support 3, an additional experiment was carried out.

A 50 L tank containing the same Barolo wine was heated up to 25°C; 20% of the volume was withdrawn with the purpose to dilute the alcohol content, and the total volume was reconstituted by adding water and the converted wine. Malic acid and pH measurements were taken daily; when the degradation of malic acid reached 80% of the initial value, the wine was then added onto a 500 L tank. Again, upon obtainment of 80% degradation, the wine was finally added in a tank containing 4000 L of the unconverted Barolo wine.

In terms of time the whole process, starting from the 5 L of converted wine, lasted 21 days. The final wine parameters were the following:

| | |
|---|---|
| 1. Alcohol (% v/v) | 14 |
| 2. Titratable acidity (g/L) | 5.10 |
| 3. pH | 3.72 |
| 4. Malic acid (g/L) | 0.10 |

Naturally, while the principle of the invention remains the same, the details of construction and the embodiments may widely vary with respect to what has been described and illustrated purely by way of example, without departing from the scope of the present invention.

## Claims

1. Apparatus (1) for controlling malolactic fermentation in a fermented fruit juice containing a first amount of malic acid, comprising:
a. a reaction vessel (2);
b. an anchorage porous support (3) having an external surface, located within the reaction vessel (2), and suitable to fix on its external surface microorganisms susceptible to induce the malolactic fermentation;
c. a first inlet means (4) for receiving, within the reaction vessel (2), the fermented fruit juice containing a first amount of malic acid; and
d. a second outlet means (5) for discharging the fermented fruit juice containing a second amount of malic acid lower than the first amount of malic acid,
**characterized in that** said first inlet means (4) and said second outlet means (5) communicate directly with the reaction vessel (2) without the interposition of filtering means.

2. Apparatus according to claim 1, **characterized in that** it further comprises a third inlet means (8) in fluid communication with the first inlet means (4) for introducing, within the reaction vessel (2), at least one among a microorganisms inoculum liquid, a microorganisms culture medium, a sanitization liquid, a sterilization liquid and a washing liquid.

3. Apparatus according to claim 1 or claim 2, **characterized in that** it further comprises a control unit (6) for controlling the reaction conditions within the reaction vessel (2).

4. Apparatus according to claim 3, **characterized in that** said control unit (6) for controlling the reaction conditions comprises at least one from a pH sensor, a temperature sensor, a O₂ partial pressure sensor, a CO₂ partial pressure sensor, a N₂ partial pressure sensor, an air partial pressure sensor.

5. Apparatus according to any one of claims 2 to 4, **characterized in that** the apparatus (1) further comprises a fourth outlet means (9) connected to the anchorage porous support (3) for discharging the culture medium introduced within the reaction vessel (2).

6. Apparatus according to any one of the preceding claims, **characterized in that** the anchorage porous support (3) is selected among surface or depth filters, lenticolar filters, filtering cartridges, sponges, ceramics, stainless filters, reps inox.

7. Apparatus according to any one of the preceding claims, **characterized in that** the anchorage porous support (3) has a positive zeta potential in an aqueous environment.

8. Apparatus according to any one of the preceding claims, **characterized in that** the anchorage porous support (3) is wettable.

9. Apparatus according to any one of the preceding claims, **characterized in that** the anchorage porous support (3) is inert towards colloidal interference.

10. Apparatus according to any one of the preceding claims, **characterized in that** the apparatus (1) is provided with a pump (7) to recirculate the fruit juice within the apparatus (1) by means of a recirculation implant (17).

11. Process for inducing malolactic fermentation in a first volume of a fermented fruit juice containing a first amount of malic acid, comprising the following steps:
a. feeding the fermented fruit juice containing the first amount of malic acid within the apparatus as defined in any one of claims 1 to 10;
b. keeping and/or recirculating the first volume of the fermented fruit juice containing the first amount of malic acid within the apparatus (1) for a period of time sufficient for the conversion of at least a portion of the first amount of malic acid in lactic acid; and
c. discharging from the apparatus (1) the first volume of the fermented fruit juice containing a second amount of malic acid lower than the first amount of malic acid.

12. Process according to claim 11, **characterized in that** before feeding the fermented fruit juice containing the first amount of malic acid within the apparatus (1), a sterilization phase of the apparatus (1) is carried out.

13. Process according to claim 12, **characterized in that** said sterilization phase provides for feeding a sterilization liquid through the third inlet means (8) and discharging the sterilization liquid through the second outlet means (5).

14. Process according to any one of claims 11 to 13, **characterized in that** before feeding the fermented fruit juice containing the first amount of malic acid within the apparatus (1), a sanitization phase of the apparatus (1) is carried out.

15. Process according to claim 14, **characterized in that** said sanitization phase provides for feeding a sanitization liquid through the third inlet means (8) and discharging the sanitization liquid through the second outlet means (5).

16. Process according to claim 11 or claim 14, **characterized in that** after the sterilization or sanitization phase a reconditioning phase of the apparatus (1) is carried out.

17. Process according to claim 16, **characterized in that** said reconditioning phase provides for feeding a reconditioning liquid through the third inlet means (8) and discharging the reconditioning liquid through the second outlet means (5).

18. Process according to any one of claims 11 to 17, **characterized in that** after the sterilization and/or reconditioning phase a microorganisms growing phase is carried out, wherein said microorganisms are susceptible to induce the malolactic fermentation, wherein said growing phase is carried out within the reaction vessel (2) on the anchorage porous support (3).

19. Process according to claim 15, **characterized in that** said microorganisms growing phase comprises the following steps:
i. performing an incolum of microorganisms susceptible to induce the malolactic fermentation together with a suitable culture medium within the reaction vessel (2) through the third inlet means (8);
ii. carrying on said microorganisms growing phase within the reaction vessel (2) for a period of time sufficient to get a sufficient growth of microorganisms for the catalysis of malic acid in lactic acid;
iii. clogging the anchorage porous support (3) with the microorganisms up to saturation of the support (3) by means of discharging the culture medium through the fourth outlet means (9).

20. Process according to claim 19, **characterized in that** said microorganisms growing phase is controlled by means of a control unit (6) of the apparatus (1).

21. Process according to any one of claims 11 to 21, **characterized in that** after discharging the fermented fruit juice containing a second amount of malic acid a washing phase of the apparatus (1) is carried out by means of the introduction of a washing liquid.

22. Process according to any one of claims 11 to 21, **characterized in that** first volume of a fermented fruit juice containing the second amount of malic acid lower than the first amount of malic acid obtained at the end of phase c. is introduced in a second volume of fermented fruit juice containing a first amount of malic acid, wherein said second volume is greater than the first volume and is able to induce in said second volume the malolactic fermentation, so that said second volume of fermented fruit juice contains a second amount of malic acid lower than the first amount of malic acid.

23. Use of a first volume of fruit juice substantially free of malic acid and containing microorganisms susceptible to induce the malolactic fermentation obtainable with the process according to claims 11 to 22 for inducing the malolactic fermentation in a second volume of fermented fruit juice containing a first amount of malic acid so that a second volume of fermented fruit juice containing a second amount of malic acid lower than the first amount of malic acid is obtained.
